# EUROPÄISCHE PATENTSCHRIFT

(11) **EP 0 475 076 B1**
(45) Veröffentlichungstag und Bekanntmachung des Hinweises auf die Patenterteilung: **12.07.1995**
(21) Anmeldenummer: 91113237.1
(22) Anmeldetag: 07.08.1991
(51) Int. Cl.: C08F 220/18, C08F 2/22, C09D 133/06, C09D 125/14

(54) **Alkalisch verdickbare wässrige Polyacrylatdispersion und Verfahren zu ihrer Herstellung**
Alkali thickenable aqueous polyacrylate dispersion and process for their production
Dispersion aqueuse de polyacrylates épaississante et procédé pour sa préparation dans un milieu basique

(30) Priorität: 18.08.1990 DE 9011977 U
(43) Veröffentlichungstag der Anmeldung: 18.03.1992
(73) Patentinhaber: Röhm GmbH, 64293 Darmstadt (DE)
(72) Erfinder: Daum, Helmut, W-6104 Seeheim-Jugenheim (DE); Fölsch, Karl Josef, Dr., W-6500 Mainz (DE); Rüger, Rita, W-8750 Aschaffenburg (DE); Tessmer, Dieter, W-6090 Rüsselsheim (DE); Trabitzsch, Hans, Dr., W-6104 Seeheim-Jugenheim (DE)

(56) Entgegenhaltungen:
- DE-A- 1 469 465
- DE-A- 1 928 611
- DE-A- 2 161 909
- FR-A- 2 408 641
- CHEMICAL ABSTRACTS, vol. 88, no. 24, 12. Juni 1978, Columbus, Ohio, US; abstract no. 171939J, H.TSUGIKUNI: 'aqueous soluble resin compositions' Seite 101 ;Spalte 1 ;
- WORLD PATENTS INDEX LATEST Derwent Publications Ltd., London, GB; AN 90-064216 & JP-A-2 018 465

## Beschreibung

Die Erfindung betrifft eine alkalisch verdickbare wäßrige Polyacrylatdispersion und ein durch Verseifung mit wäßrigem Alkali daraus hergestelltes wäßriges Verdickungsmittel. Die Erfindung betrifft weiterhin ein Verfahren zur Herstellung des wäßrigen Verdickungsmittels sowie seine Anwendung zum Verdicken von wäßrigen Kunststoffdispersionen.

### Stand der Technik

Es ist seit langem gebräuchlich, wäßrige Lösungen von Alkalisalzen der Polyacrylsäure als Verdickungsmittel für wäßrige Systeme, beispielsweise von wäßrigen Kunststoffdispersionen zu verwenden. Derartige Verdickungsmittellösungen können nur mit Feststoffgehalten von etwa 10, höchstens 25 Gew.-% angewendet werden, weil sie bei höheren Konzentrationen nicht mehr fließfähig sind. Transport und Lagerung der verhältnismäßig niedrig konzentrierten Verdickungsmittellösungen sind daher wegen des hohen Ballastgewichts und -volumens im Verhältnis zu der wirksamen Substanz wenig wirtschaftlich.

Aus der DE-AS 14 69 465 sind wäßrige Textilschlichten bekannt, die durch Neutralisation eines Emulsionspolymerisats von niederen Alkylacrylaten und Acryl- oder Methacrylsäure hergestellt werden. Sie sind bei einem Feststoffgehalt von etwa 30 bis 40 Gew.-% noch ausreichend fließfähig, um transportiert und gelagert werden zu können, und werden beim Zusatz von Ammoniak oder Alkali durch Neutralisation der Carboxylgruppen des Emulsionspolymerisats in eine viskose wäßrige Lösung übergeführt. In der Praxis hat sich erwiesen, daß die zur Neutralisation verwendete Alkalimenge genau dosiert und der pH-Wert der entstehenden Lösung streng überwacht werden müssen, um eine gleichbleibende Verdickungswirkung zu gewährleisten.

Eine überwiegend aus Acrylestern aufgebaute, 40-prozentige Dispersion ist unter der Bezeichnung "PLEX 4618 D" (WZ der Röhm GmbH; Darmstadt) im Handel. Sie kann durch Alkalizusatz verseift werden und verdickt dabei innerhalb von 24 Stunden von weniger als 50 mPa s auf mehr als 25 000 mPa s bei einem Feststoffgehalt von 10 Gew.-%. Die entstandene Verdickungsmittellösung hat einen leichten Ammoniak-Geruch, der bei manchen Anwendungen stört.

### Aufgabe und Lösung

Ziel der Erfindung ist eine alkalisch verdickbare, wäßrige Polyacrylatdispersion auf Basis eines Emulsionspolymerisats von niederen Alkylacrylaten und Acrylsäure, die in möglichst hoher Konzentration herstellbar, transport- und lagerfähig ist und mit einfachsten Mitteln in eine weitgehend geruchlose wäßrige Verdickungsmittellösung mit gleichbleibenden Eigenschaften umgewandelt werden kann.

Gegenstand der Erfindung ist eine alkalisch verdickbare wäßrige Polyacrylatdispersion, enthaltend ein Emulsionspolymerisat, das zu
4 Gew.-% aus Acrylsäure,
zu 8 bis 15 Gew.-% aus einem niederen Alkylmethacrylat mit nicht mehr als 4 Kohlenstoffatomen im Alkylrest und
zu mehr als 80 Gew.-% aus Methyl- oder Ethylacrylat
aufgebaut ist.

Die erfindungsgemäße Dispersion ist selbst bei Feststoffgehalten von 50 Gew.-% noch gut fließfähig, so daß sie in dieser Form in den Handel gebracht, transportiert, beim Anwender gelagert und durch Rohrleitungen gepumpt werden kann. Gewicht und Volumen betragen nur einen Bruchteil von denen einer Polymerisat-Lösung mit vergleichbarer Verdickungswirkung. Erst unmittelbar vor der Anwendung wird eine Verdickungsmittellösung vom mehrfach größeren Volumen hergestellt, deren Konzentration beispielsweise 10 Gew.-% betragen kann.

Die alkalische Verseifung der Dispersion tritt schon bei Raumtemperatur ein und erfordert geringste technische Hilfsmittel. Es ist weder notwendig zu erwärmen oder zu kühlen, noch während der Verseifung dauernd zu rühren. Eine genaue pH-Kontrolle ist entbehrlich; es genügt, die Alkalimenge mit mäßiger Genauigkeit zu bemessen.

Das wäßrige Verdickungsmittel wird vorzugsweise dadurch hergestellt, daß die erfindungsgemäße Polyacrylatdispersion bei einem Feststoffgehalt unter 25 Gew.-% bei Raumtemperatur mit 50 bis 80 Mol-% der zur vollständigen Verseifung ausreichenden Menge an wäßrigem Alkali versetzt wird.

Nach Zusatz des Alkalis kann der Ansatz sich selbst überlassen bleiben. Er erreicht nach 16 bis 24 Stunden seine endgültige Viskosität und verändert sich später nicht mehr wesentlich. Unter der Voraussetzung, daß die Dispersion bei der Herstellung vollständig auspolymerisiert war und keine nennenswerten Mengen an Restmonomeren enthält, hat die entstehende wäßrige Verdickungsmittellösung lediglich einen schwachen Geruch nach dem bei der Verseifung gebildeten Alkohol und ist jedenfalls frei von störendem Ammoniakgeruch.

### Ausführung der Erfindung

Methyl- oder Ethylacrylat bilden den Hauptbestandteil des Emulsionspolymerisats. Methylacrylat ist bevorzugt. Höhere Alkylacrylate würden das Polymerisat hydrophober machen, so daß es weniger leicht hydrolysierbar wäre.

Eine ähnliche Wirkung kann von dem Alkylmethacrylat ausgehen, das in einem Anteil von 8 bis 15 Gew.-% am Aufbau des Emulsionspolymerisats beteiligt ist. Methylmethacrylat ist bevorzugt. Andere niedere Alkylmethacrylate sind verwendbar, wenn sie nicht mehr als 4 Kohlenstoffatome im Alkylrest enthalten. Der Methacrylesteranteil hat sich als nützlich für eine gleichbleibende Verdickungswirkung erwiesen. Er liegt vorzugsweise bei etwa 10 bis 12 Gew.-%.

Der Anteil von etwa 4 Gew.-% Acrylsäure hat sich als wesentlich für das Hydrolyseverhalten erwiesen. Liegt er niedriger, so kommt die Verseifung bei Alkalizusatz nicht ohne anfängliches Erwärmen in Gang. Liegt er über 4 Gew.-%, so verläuft sie zu stürmisch.

Die erfindungsgemäßen Polyacrylatdispersionen können nach klassischen Verfahren der Emulsionspolymerisation, vorteilhaft mit Feststoffgehalten von 40 bis 50 Gew.-%, hergestellt werden. Man verwendet übliche, insbesondere anionische Emulgatoren, wie Natriumlaurylsulfat oder sulfatierte Alkylphenol-Oxethylate. Zur Auslösung der Polymerisation werden vorzugsweise wasserlösliche Initiatoren, wie Natrium-peroxodisulfat, verwendet. Geeignete Polymerisationstemperaturen liegen zwischen 40 und 100^{o}C. Es ist im allgemeinen nicht erforderlich, Regler zur Begrenzung des Molekulargewichts zuzusetzen.

Die wäßrige Dispersion ist über lange Zeiträume stabil und kann bis zur Anwendung in dieser Form transportiert und gelagert werden. Unmittelbar vor der Hydrolyse wird sie zweckmäßig unter Rühren mit Wasser auf einen Feststoffgehalt von etwa 8 bis 13 Gew.-% verdünnt. Durch Zusatz von Natron- oder Kalilauge unter Rühren wird die Hydrolyse bei Raumtemperatur in Gang gesetzt. Es ist nicht zweckmäßig, mehr als die zur vollständigen Hydrolyse erforderliche Alkalimenge zu verwenden. Vorzugsweise wird eine zur vollständigen Verseifung nicht ausreichende Menge, beispielsweise 50 bis 80 Mol-%, insbesondere 65 - 70 Mol-%, berechnet auf die Säure- und Estereinheiten des Polymerisats, eingesetzt. Die Hydrolyse läuft unter gelinder Selbsterwärmung ab und ist nach 16 bis 24 Stunden im wesentlichen abgeschlossen. Die entstandene Polymerisatlösung ist schwach trüb und hat in der Regel bei einem Feststoffgehalt von 10 Gew.-% eine Brookfield-Viskosität im Bereich von 25 000 bis 50 000 mPa s (Spindel IV, 6 Upm, 20^{o}C), die sich auch bei längerer Lagerung nicht wesentlich verändert. Der pH-Wert liegt nach Abschluß der Teilverseifung in der Regel bei 10 bis 11.

Die entstandene hochviskose Polymerisatlösung kann zum Verdicken von wäßrigen Zubereitungen, wie Lösungen, Emulsionen oder Dispersionen verwendet werden. Sie können schwach sauer, neutral oder alkalisch sein. Bevorzugte Anwendungsgebiete sind die Verdickung von wäßrigen Appreturen, Compounds und insbesondere von wäßrigen Kunststoffdispersionen. Man erreicht dadurch eine streichbare Konsistenz, wie sie beispielsweise für Teppich-Rückenbeschichtungen durch Butadien-Styrol-Dispersionen erwünscht ist. Übliche Einsatzmengen sind z.B. 1 bis 5 Teile des 10-prozentigen Verdickungsmittels auf 100 Teile eines 50-%igen SBR-Latex, dessen Viskosität durch den Zusatz beispielsweise von 110 auf 24000 mPa s ansteigt.

### Ausführungsbeispiel

### A. Herstellung einer erfindungsgemäßen Dispersion

In einem 2 l-Reaktionsgefäß, ausgerüstet mit Rückflußkühler, Rührwerk und Zulaufgefäß, werden 0,216 g Ammoniumperoxodisulfat und 0,09 g eines Emulgators in 360 g entsalztem Wasser bei 20^{o}C gelöst. Als Emulgator wird ein mit der 7-fachen Molmenge Ethylenoxid umgesetztes, anschließend sulfatiertes und mit Natronlauge neutralisiertes Triisobutylphenol verwendet.

Die Lösung wird auf 80^{o}C erhitzt. Unter Rühren wird eine Emulsion aus
774 g Methylacrylat,
90 g Methylmethacrylat,
36 g Acrylsäure,
14 g des oben genannten Emulgators,
555 g entsalztem Wasser
innerhalb von 4 Stunden gleichmäßig zudosiert. Anschließend wird noch eine Stunde bei 80^{o}C gerührt und auf Raumtemperatur abgekühlt, wobei bei einer Temperatur von 70^{o}C 0,9 g 1,4-Diisopropylbenzolmonohydroperoxid und 0,7 g Natriumhydroxymethylsulfinat als Redox-Initiator für die Polymerisation der Restmonomeren Zugegeben werden. Nach der Abkühlung wird filtriert.

Der pH-Wert der 50-%igen Dispersion beträgt 2,4; der Teilchendurchmesser 190 nm.

### B. Verseifung der Dispersion

17 kg der Dispersion werden unter Rühren mit 77,4 kg Leitungswasser verdünnt. Innerhalb von 10 Minuten werden 5,6 kg 50 %ige Natronlauge eingerührt. Zur homogenen Verteilung wird noch 30 Minuten nachgerührt und der Ansatz dann bis zum anderen Tag stehengelassen. Es werden eine Viskosität von 41 000 mPa s, ein pH-Wert von 12,4 und ein Feststoffgehalt von 9,9 Gew.-% bestimmt.

### C-1. Verdicken einer wäßrigen Kunststoffdispersion

In 100 Gew.-Teile einer 50 %igen Styrol-Butadien-Kunststoffdispersion mit einer Viskosität von 110 mPa s werden 3 Gew.-Teile der verseiften Dispersion eingerührt. Man erhält eine streichfähige Paste mit einer Viskosität von 24 000 mPa s.

### C-2. Verdicken eines Kreide-Latex-Compounds

149 Gew.-Teile einer 50 %igen Styrol-Butadien-Kunststoffdispersion mit einer Viskosität von 110 mPa s werden zunächst mit 27,6 Gew.-Teilen Wasser verdünnt, wobei die Viskosität auf 14 mPa s fällt. 223,4 Gew.-Teile Kreide werden in die Vorlage eingearbeitet, wobei die Viskosität auf 300 mPa s steigt. Durch Einrühren von 1,5 Gew.-Teilen der verseiften Dispersion wird die Viskosität auf 7400 mPa s gesteigert.

## Patentansprüche

1. Alkalisch verdickbare wäßrige Polyacrylatdispersion, enthaltend ein Emulsionspolymerisat von niederen Alkylacrylaten und Acrylsäure,
dadurch gekennzeichnet,
daß das Emulsionspolymerisat zu
4 Gew.-% aus Acrylsäure,
8 bis 15 Gew.-% aus einem niederen Alkylmethacrylat mit nicht mehr als 4 Kohlenstoffatomen im Alkylrest und
zu mehr als 80 Gew.-% aus Methyl- oder Ethylacrylat
aufgebaut ist.

2. Polyacrylatdispersion nach Anspruch 1, dadurch gekennzeichnet, daß sie ein Terpolymerisat aus Methylacrylat, Methylmethacrylat und Acrylsäure enthält.

3. Wäßriges Verdickungsmittel, hergestellt durch teilweise Verseifung der Polyacrylatdispersion nach Anspruch 1 oder 2 mit 50 bis 80 Mol-% der zur vollständigen Verseifung ausreichenden Menge an wäßrigem Alkali.

4. Verfahren zur Herstellung eines wäßrigen Verdickungsmittels, dadurch gekennzeichnet, daß die Polyacrylatdispersion nach Anspruch 1 oder 2 bei einem Feststoffgehalt unter 25 Gew.-% bei Raumtemperatur mit 50 bis 80 Mol-% der zur vollständigen Verseifung ausreichenden Menge an wäßrigem Alkali versetzt wird.

5. Verfahren nach Anspruch 4, dadurch gekennzeichnet, daß 65 bis 70 Mol-% der zur vollständigen Verseifung erforderlichen Menge an wäßrigem Alkali eingesetzt werden.

6. Verwendung des wäßrigen Verdickungsmittels nach Anspruch 3 zum Verdicken von wäßrigen Kunststoffdispersionen.

## Claims

1. An aqueous polyacrylate dispersion which may be thickened by alkali, comprising an emulsion polymer of lower alkyl acrylates and acrylic acid, characterised in that the emulsion polymer is synthesised, in an amount of 4 wt.%, from acrylic acid, in an amount of from 8 to 15 wt.%, from a lower alkyl methacrylate having not more than 4 carbon atoms in the alkyl group, and, in an amount of more than 80 wt.%, from methyl or ethyl acrylate.

2. A polyacrylate dispersion according to claim 1, characterised in that it contains a terpolymer consisting of methyl acrylate, methyl methacrylate and acrylic acid.

3. An aqueous thickening agent, prepared by partial saponification of the polyacrylate dispersion according to claim 1 or 2 using 50 to 80 Mol % of the amount of aqueous alkali which is sufficient for complete saponification.

4. A process for preparing an aqueous thickening agent, characterised in that the polyacrylate dispersion, according to claim 1 or 2, with a solid content of less than 25 wt.%, is mixed at ambient temperature with 50 to 80 Mol % of the amount of aqueous alkali sufficient for complete saponification.

5. A process according to claim 4, characterised in that 65 to 70 Mol % of the amount of aqueous alkali is used for complete saponification.

6. Use of the aqueous thickening agent, according to claim 3, for thickening aqueous plastics dispersions.

## Revendications

1. Dispersion aqueuse de polyacrylate épaississable sous l'action d'une substance alcaline, contenant un produit de polymérisation en émulsion d'acrylates d'alkyles inférieurs et d'acide acrylique,
caractérisée en ce que le produit de polymérisation en émulsion se compose,
pour 4% en poids, d'acide acrylique,
pour 8 à 15% en poids, d'un méthacrylate d'alkyle inférieur ne renfermant pas plus de 4 atomes de carbone dans le reste alkyle et,
pour plus de 80% en poids, d'acrylate de méthyle ou d'éthyle.

2. Dispersion de polyacrylate selon la revendication 1, caractérisée en ce qu'elle contient un terpolymère d'acrylate de méthyle, de méthacrylate de méthyle et d'acide acrylique.

3. Epaississant aqueux, préparé par saponification partielle de la dispersion de polyacrylate selon la revendication 1 ou 2 par 50 a 80% en moles de la quantité de substance alcaline aqueuse suffisante pour la saponification complète.

4. Procédé de préparation d'un épaississant aqueux, caractérisé en ce que la dispersion de polyacrylate selon la revendication 1 ou 2, ayant une teneur en matières solides inférieure à 25% en poids, est additionnée, a la température ambiante, de 50 à 80% en moles de la quantité de substance alcaline aqueuse suffisante pour la saponification complète.

5. Procédé selon la revendication 4, caractérisé en ce que l'on utilise de 65 à 70% en moles de la quantité de substance alcaline aqueuse nécessaire pour la saponification complète.

6. Utilisation de l'épaississant aqueux selon la revendication 3 pour l'épaississement de dispersions aqueuses de matières plastiques.
